# EUROPÄISCHE PATENTSCHRIFT

(11) **EP 2 912 336 B1**
(45) Veröffentlichungstag und Bekanntmachung des Hinweises auf die Patenterteilung: **01.03.2017**
(21) Anmeldenummer: 13766079.1
(22) Anmeldetag: 23.09.2013
(51) Int. Cl.: F16F 15/12, F16F 15/131

(54) **TORSIONSSCHWINGUNGSDÄMPFUNGSANORDNUNG MIT LEISTUNGSVERZWEIGUNG**
TORSIONAL VIBRATION DAMPING ARRANGEMENT WITH POWER SPLITTING
ENSEMBLE AMORTISSEUR DE VIBRATIONS DE TORSION AVEC DÉRIVATION DE PUISSANCE

(30) Priorität: 24.10.2012 DE 102012219421
(43) Veröffentlichungstag der Anmeldung: 02.09.2015
(73) Patentinhaber: ZF Friedrichshafen AG, 88046 Friedrichshafen (DE)
(72) Erfinder: LORENZ, Daniel, 97688 Bad Kissingen (DE); WEIGAND, Thomas, 97990 Weikersheim (DE); HÖCHE, Tobias, 97461 Hofheim i. UFr. (DE)
(86) Internationale Anmeldenummer: PCT/EP2013/069741
(87) Internationale Veröffentlichungsnummer: WO 2014/063882

(56) Entgegenhaltungen:
- WO-A1-95/20728
- DE-A1-102011 075 244

## Beschreibung

Ausführungsbeispiele der vorliegenden Erfindung befassen sich mit Torsionsschwingungsdämpfungsanordnungen, insbesondere mit Torsionsschwingungsdämpfungsanordnungen, in denen eine Leistungsverzweigung stattfindet.

In Antriebssträngen, insbesondere von mit Brennkraftmaschinen betriebenen Fahrzeugen, kommt es häufig zu Drehungleichförmigkeiten in Form von Schwankungen des von der Kurbelwelle abgegebenen Drehmoments bzw. der abgegebenen Drehzahl. Dies ist unter anderem darin begründet, dass in Brennkraftmaschinen nur in diskreten Zeitabständen eine Energieeinleitung, beispielsweise durch Zünden eines Benzin-LuftGemisches, erfolgt, die in einer Rotationsbewegung resultiert. Durch den zeitdiskreten Energieeintrag unterliegt sowohl das von der Kurbelwelle abgegebene Drehmoment als auch die Drehzahl der Kurbelwelle Schwankungen bzw. Schwingungen um einen mittleren Wert. Diese Schwankungen sollen nachfolgend allgemein als Drehungleichförmigkeiten verstanden werden, welche zu Torsionsschwingungen im Antriebsstrang führen können, also zu Oszillationen der Drehzahl, die einer Rotation mit konstanter Drehzahl überlagert sind.

Derartige Drehungleichförmigkeiten können im Fahrbetrieb spürbar sein, und sollen weitestgehend eliminiert bzw. gedämpft werden. Zu deren Dämpfung sind eine Reihe von Technologien bekannt. Beispielsweise kann durch den Einsatz von Kraft- bzw. Energiespeichern ein Teil der bei einer Drehungleichförmigkeit auftretenden Energie zwischengespeichert werden, um diese darauffolgend in den Antriebsstrang derart abzugeben, dass ein geglätteter Drehzahl- bzw. Drehmomentverlauf erreicht wird. Beispiele für solche Systeme sind Zweimassenschwungräder und sogenannte Tilger, die ein Massenpendel darstellen, bei dem aufgrund der Drehungleichförmigkeit eine Auslenkung einer schwingenden Masse entgegen der Fliehkraft erfolgt, die schwingende Masse also parallel und entgegengesetzt zur Richtung der Fliehkraft oszilliert.

Ein neuerer Ansatz ist das Verwenden von leistungsverzweigenden Systemen, bei denen das vom Antriebsaggregat erzeugte Drehmoment parallel über einen ersten Drehmomentübertragungsweg und über einen zweiten Drehmomentübertragungsweg übertragen wird. Die beiden Drehmomentübertragungswege münden in einer Koppelanordnung, die das mittels der unterschiedlichen Drehmomentübertragungswege übertragene Drehmoment wieder zusammenführt. Durch eine Phasenschieberanordnung zum Bewirken einer Phasenverschiebung zwischen Torsionsschwingungen, die über den ersten Drehmomentübertragungsweg zu der Koppelanordnung übertragen werden und den Torsionsschwingungen, die über den zweiten Drehmomentübertragungsweg zu der Koppelanordnung übertragen werden, kann eine Dämpfung oder Eliminierung der Torsionsschwingungen erreicht werden. Eine Eliminierung gelingt in Ausnahmefällen beispielsweise dann, wenn die Phasenverschiebung 180° beträgt und die Amplituden der beiden Schwingungsanteile in dem richtigen Verhältnis stehen, das von der Koppelanordnung abhängig ist.

Aufgrund der kontinuierlichen Anstrengungen, die Energieeffizienz von Fahrzeugen zu verbessern, werden häufig Antriebsstränge konzipiert, die von Motoren mit niedriger Drehzahl oder verkleinertem Hubraum ("Downspeeding" und "Downsizing") angetrieben werden. Der immer weiter in den Fokus rückende niedrige Drehzahlbereich von der Leerlaufdrehzahl bis beispielsweise 1400 U/min oder 1800 U/min führt zu steigenden Anregungen von Drehungleichförmigkeiten. Zusätzlich werden neue Quellen von Drehungleichförmigkeiten geschaffen, beispielsweise durch Motoren mit Zylinderabschaltung, Start-/Stopp-Systemen und/oder Fahrzeuge mit unterschiedlichen Hybridisierungsstufen. Dies wiederum erfordert Torsionsschwingungsdämpfungsanordnungen, die in ihrer Leistungsfähigkeit bzw. der Fähigkeit, Drehungleichförmigkeiten zu dämpfen, deutlich über denjenigen der heutigen Systeme liegen, die also eine verbesserte Dämpfung von Torsionsschwingungen ermöglichen.

Das Dokument DE 10 2011 075 244 A1 wird als nächstliegender Stand der Technik betrachtet und offenbart alle Merkmale des Oberbegriff des Anspruchs 1.

Ausführungsbeispiele der vorliegenden Erfindung ermöglichen dies, indem in einer Torsionsschwingungsdämpfungsanordnung mit Leistungsverzweigung zum Bewirken einer Phasenverschiebung zwischen Torsionsschwingungen, die über einen ersten Drehmomentübertragungsweg von einer Antriebsseite zu einer Abtriebsseite übertragen werden und solchen, die über einen zweiten Drehmomentübertragungsweg übertragen werden, zum Erzeugen der Phasenverschiebung ein schwingungsfähiges System verwendet wird, dessen Sekundärseite ein von der Rotationsgeschwindigkeit abhängiges wirksames Massenträgheitsmoment besitzt. Das heißt, das zur Erzeugung einer Phasenverschiebung verwendete schwingungsfähiges System, das eine mit der Antriebsseite der Torsionsschwingungsdämpfungsanordnung gekoppelte Primärseite und eine bezüglich der Primärseite um eine Rotationsachse drehbare Sekundärseite umfasst, ist derart ausgebildet, dass ein wirksames Massenträgheitsmoment der Sekundärseite, also das Massenträgheitsmoment, das eine Veränderung einer Rotationsgeschwindigkeit der Sekundärseite hemmt, von der Rotationsgeschwindigkeit abhängig ist.

Bei einem herkömmlichen leistungsverzweigenden System gibt es prinzipiell genau eine Drehzahl, bei der die Drehungleichförmigkeiten durch die Addition der Momente in der Koppelanordnung, bei welcher die Momente im fixen Verhältnis addiert werden, vollständig erfolgt. Diese Drehzahl wird aus diesem Grund auch als Auslöschpunkt bezeichnet.

Durch Verwendung eines Ausführungsbeispiels einer Torsionsschwingungsdämpfungsanordnung kann dieser Auslöschpunkt prinzipiell auf ein ganzes Drehzahlband ausgedehnt werden, indem das wirksame Massenträgheitsmoment der Sekundärseite des schwingungsfähigen Systems in der Torsionsschwingungsdämpfungsanordnung drehzahlabhängig verändert wird. Dies kann bei geeigneter Abstimmung dazu führen, dass durch die Nachführung des wirksamen Massenträgheitsmoments die Amplituden der Drehungleichförmigkeiten, die über den das schwingungsfähige System enthaltenden Drehmomentübertragungsweg übertragen werden, durch die Änderung des wirksamen Massenträgheitsmoments der Sekundärseite des schwingungsfähigen Systems in Abhängigkeit von der Drehzahl derart geändert werden, dass diese trotz Addition der Momente in einem immer festen Verhältnis über den gesamten Drehzahlbereich, über den die Nachführung erfolgt, näherungsweise vollständig kompensiert werden.

Das heißt, Ausführungsbeispiele der vorliegenden Erfindung können beispielsweise dazu verwendet werden, einen Antriebsmotor, der mit der Torsionsschwingungsdämpfungsanordnung gemäß einem Ausführungsbeispiel der Verbindung gekoppelt ist, überwiegend bei niedrigen Drehzahlen zu betreiben, ohne wahrnehmbare Störungen im Antriebsstrang eines Fahrzeugs oder KFZ in Kauf nehmen zu müssen. Dort wirken sich Drehungleichförmigkeiten üblicherweise besonders spürbar aus, was jedoch vermieden werden kann, da mittels eines Ausführungsbeispiels einer Torsionsschwingungsdämpfungsanordnung über den gesamten relevanten Drehzahlbereich eine nahezu vollständige Kompensation der Drehungleichförmigkeiten erzielt werden kann.

Insbesondere wird gemäß einigen Ausführungsbeispielen der vorliegenden Erfindung das wirksame Massenträgheitsmoment der Sekundärseite mit steigender Drehzahl geringer, was dazu führen kann, dass die für einen Verbrennungsmotor typische Drehzahlabhängigkeit der Drehungleichförmigkeiten, deren Amplitude mit der Drehzahl des Motors skaliert, kompensiert wird.

Als wirksames Massenträgheitsmoment soll dabei hierin dasjenige Massenträgheitsmoment verstanden werden, dass tatsächlich einer Änderung der Winkelgeschwindigkeit der Sekundärseite entgegen steht bzw. diese hemmt. Dies kann sich von einem Massenträgheitsmoment, das herkömmlich betrachtet nur aus der statischen Masseverteilung eines Gegenstands im Raum berechnet werden kann, auf die nachfolgend ausgeführte Art unterscheiden, insbesondere wenn einige Elemente der Masseverteilung relativ zueinander beweglich sind.

Für die drehzahlabhängige Änderung dieses wirksamen Massenträgheitsmomentes gibt es eine Vielzahl von erfindungsgemäß möglichen Implementierungen. Gemäß einigen Ausführungsbeispielen der vorliegenden Erfindung umfasst die Sekundärseite ein Zentralelement und zumindest ein Masseelement, das derart drehfest an das Zentralelement angebunden ist, dass diese Anbindung bei Überschreiten einer vorbestimmten Rotationsgeschwindigkeit aufgehoben wird, wobei die drehfeste Anbindung beim erneuten Unterschreiten der vorbestimmten Rotationsgeschwindigkeit wieder hergestellt wird. Durch das Verbinden und Entkoppeln des Masseelements steigt bzw. sinkt die effektiv durch eine Anregung rotierte Gesamtmasse des Systems, was eine Vergrößerung bzw. Verkleinerung des wirksamen Massenträgheitsmoments zu Folge hat. Diese Änderung des wirksamen Massenträgheitsmomentes kann durch einfache Anbindung und wieder Lösen der Anbindung einer Zusatzmasse kostengünstig und effizient implementiert werden.

Gemäß einigen Ausführungsbeispielen umfasst das zumindest eine Masseelement eine ringförmige Form bzw. weist eine ringförmige Form auf, welche um die Symmetrieachse des Ringes relativ zu dem Zentralelement rotieren kann, das heißt relativ zu diesem in der Umfangsrichtung beweglich ist. Das Verwenden ringförmiger Massen kann unter anderem den Vorteil haben, dass diese einfach und genau produziert werden können, sodass die Gefahr, dass durch das oder die zusätzlichen Masseelemente Unwuchten in das System eingebracht werden, gering ist.

Gemäß einigen Ausführungsbeispielen der Erfindung besitzt der ringförmige Teil bzw. das ringförmige Masseelement entlang seiner Umfangsrichtung eine Mehrzahl von zueinander benachbarten und sich radial vollständig durch das Masseelement erstreckende Durchbrüche, in die ein Verriegelungsstift eines Stellelements eingreifen kann, welches wiederum drehfest und radial beweglich an das Zentralelement angebunden ist. Dies ermöglicht auf einfache Art und Weise das Lösen der drehfesten Anbindung des Masselelements bei höheren Drehzahlen, bei denen sich das Stellelement unter dem Einfluss der Fliehkraft von einer radial inneren zu einer radial äußeren Position bewegt.

Der Verriegelungsstift des Stellelements, der sich bei der radial inneren Position durch einen der Durchbrüche im Masseelement erstreckt, wird zusammen mit dem Stellelement bei zunehmender Drehzahl nach radial außen bewegt, sodass ab einer vorbestimmten Grenzdrehzahl der Verriegelungsstift aus dem Durchbruch herausbewegt ist und die drehfeste Anbindung des Masseelements an das Zentralelement bzw. die Sekundärseite aufgehoben wird. So kann ohne aktiv angesteuerte Aktuatoren oder dergleichen effizient und kostengünstig sowie langzeitstabil eine Aufhebung einer Anbindung des Masseelements an das Zentralelement bei einer vorgegebenen Drehzahl bewirkt werden.

Gemäß einiger weiterer Ausführungsbeispiele der vorliegenden Erfindung wird eine Mehrzahl von ringförmigen Masseelementen mit sich jeweils radial durch die Masseelemente erstreckenden Durchbrüchen verwendet, wobei die einzelnen Masseelemente konzentrisch zueinander und radial zueinander benachbart mit steigendem Durchmesser angeordnet sind. Die einzelnen Masselelemente sind relativ zueinander verdrehbar, wobei deren Durchbrüche dieselbe Winkelteilung aufweisen, sodass sich in der radial inneren Position des Stellelements der Verriegelungsstift desselben durch jeweils einen Durchbruch in jedem der Masseelemente erstreckt, um in der radial inneren Position alle Masseelemente drehfest an das Zentralelement anzubinden. Diese Ausführungsbeispiele ermöglichen eine mehrstufige Schaltcharakteristik bzw. eine mehrstufige drehzahlabhängige Variation des wirksamen Massenträgheitsmomentes, was dazu führen kann, dass der Auslöschpunkt über einen größeren Drehzahlbereich ausgedehnt werden kann bzw. dass innerhalb eines größeren Drehzahlbereiches die Drehungleichförmigkeiten mittels eines solchen Ausführungsbeispiels der vorliegenden Erfindung effektiver bedämpft bzw. kompensiert werden können.

Um die Schaltcharakteristik der Ausführungsbeispiele mit einer Mehrzahl von Masseelementen zu optimieren, ist gemäß einigen Ausführungsbeispielen der vorliegenden Erfindung zwischen jeweils zwei radial benachbarten Masseelementen ein Gleitelement aus einem sich von dem Material der Masseelemente unterscheidenden Material angeordnet, um die Reibung zwischen den benachbarten Masseelementen zu verringern und zu verhindern, dass Masseelemente, deren Kopplung eigentlich aufgehoben werden soll, reibungsreduziert dennoch zum wirksamen Massenträgheitsmoment beitragen.

Gemäß einigen Ausführungsbeispielen der vorliegenden Erfindung ist das Stellelement unter dem Einfluss der Fliehkraft gegen die Wirkung eines Federelements nach radial außen beweglich, was es ermöglicht, die Schaltcharakteristik bzw. die Drehzahladaptivität der Torsionsschwingungsdämpfungsanordnung noch genauer einzustellen, indem eine geeignete Federcharakteristik für das Federelement verwendet wird, sodass bei genau vorgegebenen Drehzahlen einzelne Masseelemente abgekoppelt werden können. Insbesondere weisen zu diesem Zweck die Federelemente einiger Ausführungsbeispiele eine progressive Federkennlinie auf oder eine Federkennlinie, die zumindest eine bzw. mehrere sprunghafte Veränderungen der Federsteifigkeit aufweist.

Gemäß einigen Ausführungsbeispielen der vorliegenden Erfindung weisen die Stellelemente zumindest einen weiteren Verriegelungsstift auf, der sich in der radial inneren Position des Stellelements lediglich durch die Durchbrüche einer Gruppe von radial äußeren Masseelementen erstreckt, wobei die Masseelemente dieser Gruppe im Bereich des Verriegelungsstifts bzw. des ersten Verriegelungsstifts eine sich in Umfangsrichtung erstreckende Ausnehmung aufweisen. Das heißt, ein erster Verriegelungsstift erstreckt sich radial vollständig nach innen durch das Paket der radial gestaffelten Masseringelemente, während ein zweiter Verriegelungsstift sich nicht vollständig nach innen erstreckt, sondern zumindest einen radial äußeren Massering blockiert bzw. diesen drehfest anbindet. Dies kann bei ansonsten gleicher Auslegung des Systems beispielsweise den Vorteil haben, dass bei gleichem radialen Hub des Stellelements mehr Masseringelemente konstanter Dicke abgekoppelt werden können, was wiederum dazu führt, dass für die Stellelemente ein geringerer radialer Bauraum benötigt wird.

Gemäß einigen Ausführungsbeispielen der vorliegenden Erfindung sind die Masseelemente innerhalb eines mit einem Schmiermittel zumindest teilweise gefüllten Volumens angeordnet, das heißt, die Vorrichtung wird geschmiert betrieben, um eine Abkopplung zwischen dem Masselelement und dem Zentralelement bzw. zwischen den einzelnen Masseelementen zu unterstützen, sodass diese im abgekoppelten Zustand nicht etwa durch Reibmomente oder dergleichen noch auf ungewünschte Art und Weise zur wirksamen Massenträgheit der Sekundärseite beitragen können.

Gemäß weiteren Ausführungsbeispielen der Erfindung kann die drehzahlabhängige Variation der wirksamen Massenträgheit auf kostengünstige und effiziente Art und Weise dadurch erreicht werden, dass ein einziges Masseelement vorgesehen ist, das in Umfangsrichtung relativ zu dem Zentralelement beweglich ist, wobei das Masseelement von einer Federanordnung in der axialen Richtung gegen eine Anlauffläche an dem Zentralelement gedrückt wird. Das heißt, das Beitragen der Masse des Masseelements zu dem wirksamen Massenträgheitsmoment wird über eine reibungsvermittelte Verbindung zwischen dem Primärelement und dem Masseelement erreicht, die durch die Federanordnung unterstützt wird bzw. deren Stärke durch die Federanordnung eingestellt werden kann. Dies kann den Vorteil haben, dass bereits bei konstanter Federkraft eine Abhängigkeit des wirksamen Massenträgheitsmoments von der Winkelbeschleunigung gegeben ist, da ab einer bestimmten Winkelbeschleunigung, wenn die Reibungsgrenze zwischen dem Masseelement und dem Zentralelement überschritten wird, ein dann relativ zu dem Zentralelement bewegtes, an der Anlauffläche gleitendes Masseelement nicht mehr mit seiner vollen trägen Masse zum wirksamen Massenträgheitsmoment beiträgt.

Gemäß einigen Ausführungsbeispielen wird die Möglichkeit der Abstimmung eines solchen Ausführungsbeispiels der Erfindung zusätzlich noch dadurch erweitert, dass die von der Federanordnung verursachte Anpresskraft von der Rotationsgeschwindigkeit abhängig ist, um die Rotationsgeschwindigkeit, ab der ein Gleiten zwischen dem Masseelement und dem Zentralelement eintritt, zusätzlich zu der Abhängigkeit von den Reibungskoeffizienten der beteiligten Materialien weiter beeinflussen zu können. Mit anderen Worten wird die Anpresskraft drehzahladaptiv variiert.

Es zeigen:
- Fig. 1: ein Beispiel für ein leistungsverzweigendes System zur Bedämpfung von Torsionsschwingungen;
- Fig. 2: eine Ansicht einer Zwischenmasse bzw. einer Sekundärseite eines schwingungsfähigen Systems gemäß einem Ausführungsbeispiel einer Torsionsschwingungsdämpfungsanordnung;
- Fig. 3: einen Längsschnitt und einen Querschnitt durch das Ausführungsbeispiel der Fig. 2;
- Fig. 4: einen Längsschnitt durch das Ausführungsbeispiels der Fig. 2 bei erhöhter Drehzahl;
- Fig. 5: eine Darstellung einer Drehzahlabhängigkeit eines Massenträgheitsmoments einer Zwischenmasse bzw. einer Sekundärseite eines schwingungsfähigen Systems gemäß einem Ausführungsbeispiel der vorliegenden Erfindung;
- Fig. 6: eine Ansicht einer Zwischenmasse bzw. einer Sekundärseite eines schwingungsfähigen Systems gemäß einem weiteren Ausführungsbeispiel einer Torsionsschwingungsdämpfungsanordnung;
- Fig. 7: einen Längsschnitt und einen Querschnitt durch das Ausführungsbeispiel der Fig. 6;
- Fig. 8: den Längsschnitt durch das Ausführungsbeispiel der Fig. 6 bei erhöhter Drehzahl;
- Fig. 9: eine Ansicht einer Zwischenmasse bzw. einer Sekundärseite eines schwingungsfähigen Systems gemäß einem weiteren Ausführungsbeispiel einer Torsionsschwingungsdämpfungsanordnung; und
- Fig. 10: einen Querschnitt durch die Zwischenmasse des Ausführungsbeispiels der Fig. 9.

Beispielhafte Ausführungsbeispiele werden nun in Bezugnahme auf die beigefügten Figuren beschrieben. Dabei wird vorab darauf hingewiesen, dass die Figuren nicht notwendigerweise maßstabsgetreu gezeichnet sind und dass, um gewisse Merkmale oder Eigenschaften hervorzuheben, bestimmte Komponenten durch Verwendung einer anderen Strichstärke oder Schraffur künstlich hervorgehoben sein können.

Es wird explizit darauf hingewiesen, dass weitere Ausführungsbeispiele durch die in den nachfolgenden Figuren gezeigten speziellen Implementierungen nicht eingeschränkt werden sollen. Insbesondere soll die Tatsache, dass bestimmte Funktionalitäten in den folgenden Figuren bezüglich spezieller Entitäten, spezifischer Funktionsblöcke oder spezifischer Vorrichtungen beschrieben werden, nicht so ausgelegt werden, dass diese Funktionalitäten in weiteren Ausführungsbeispielen auf dieselbe Art und Weise verteilt sein sollen oder gar müssen. In weiteren Ausführungsbeispielen mögen bestimmte, nachfolgend getrennten Bauteilen oder Einheiten zugeordnete Funktionalitäten in einem einzigen Bauteil bzw. in einem einzigen funktionalen Element zusammengefasst sein oder hierin als in einem einzigen Element vereinte Funktionalitäten können in getrennten funktionalen Einheiten oder durch mehrere separate Bauteile ausgeführt werden.

Ferner wird darauf hingewiesen, dass, wenn ein spezielles Element oder Bauteil als mit einem anderen Element verbunden, mit diesem gekoppelt oder an dieses angebunden bezeichnet wird, damit nicht notwendigerweise gemeint ist, dass dieses unmittelbar und direkt mit dem anderen Bauteil verbunden, gekoppelt oder an dieses angebunden sein soll. Sofern dies gemeint ist, wird darauf explizit hingewiesen, indem beschrieben ist, dass das Element mit dem weiteren Element direkt verbunden, direkt gekoppelt oder direkt an dieses angebunden ist. Dies bedeutet, dass keine dazwischenliegenden, eine indirekte Kopplung bzw. Verbindung oder Anbindung vermittelnde weiteren Elemente vorhanden sind. Darüber hinaus bezeichnen in den nachfolgenden Figuren identische Bezugszeichen identische, funktionsidentische oder funktionsähnliche Komponenten, die also zwischen den unterschiedlichen nachfolgend beschriebenen exemplarischen Ausführungsbeispielen einander substituierend ausgetauscht werden können. Daher kann auch zur detaillierten Beschreibung eines solchen Bauteils, das in einer Figur dargestellt ist, auf die Beschreibung des dazu korrespondierenden Bauteils bzw. Bauelements in einer anderen Figur zurückgegriffen werden.

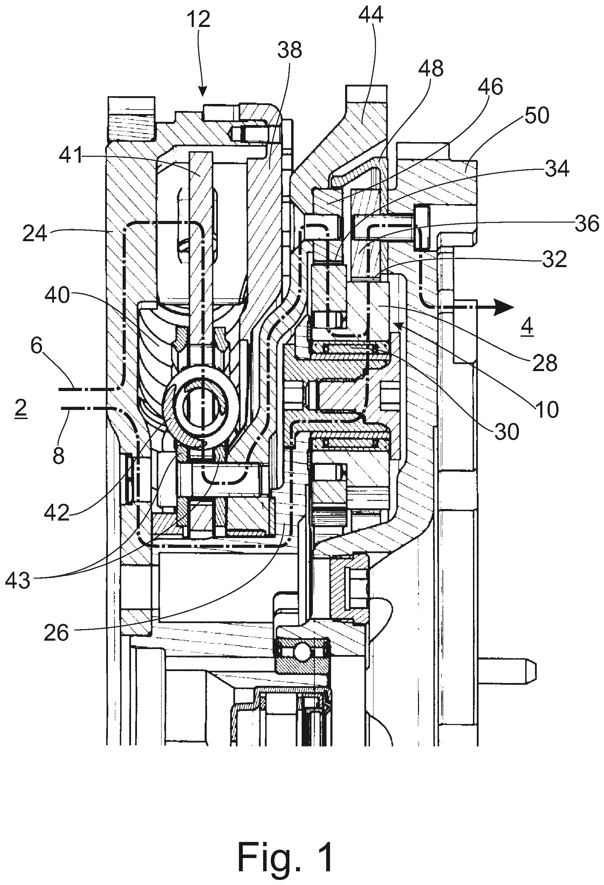

Der in Fig. 1 gezeigte Halbschnitt durch ein Beispiel für ein leistungsverzweigendes System zeigt eine Torsionsschwingungsdämpfungsanordnung, die dazu dient, eine Rotation von einer Antriebsseite 2 zu einer Abtriebsseite 4 zu übertragen. Zum Übertragen der Rotation und des von einem antriebsseitig angebundenen Antriebsaggregat erzeugten Drehmoments arbeitet die Torsionsschwingungsdämpfungsanordnung nach dem Prinzip der "Leistungsverzweigung", d. h. diese weist einen ersten Drehmomentübertragungsweg 6 und einen zweiten Drehmomentübertragungsweg 8 auf, wobei über den ersten Drehmomentübertragungsweg 6 ein erster Drehmomentanteil übertragen werden kann und wobei ein zweiter Drehmomentanteil über den zweiten Drehmomentübertragungsweg 8 übertragen wird, wie nachfolgend noch näher erläutert werden wird.

Das über die unterschiedlichen Drehmomentübertragungswege übertragene Drehmoment wird in einer Koppelanordnung 10, die vorliegend durch eine einem Planetengetriebe nachempfundene Anordnung von miteinander verzahnten drehbaren Zahnrädern gebildet wird, überlagert, sodass abtriebsseitig an einem an die Koppelanordnung 10 angebundenen abtriebsseitigen Bauteil das gesamte übertragene Drehmoment abgegriffen werden kann.

In dem ersten Drehmomentübertragungsweg 6 ist eine Phasenschieberanordnung 12 angeordnet, die eine Phasenverschiebung zwischen Torsionsschwingungen, die über den ersten Drehmomentübertragungsweg 6 zu der Koppelanordnung 10 übertragen werden und den Torsionsschwingungen, die über den zweiten Drehmomentübertragungsweg 8 zu der Koppelanordnung 10 übertragen werden, bewirkt. Die Phasenverschiebung wird insbesondere dadurch erreicht, dass sich in dem ersten Drehmomentübertragungsweg 6 ein schwingungsfähiges System befindet bzw. dass dieser ein solches System bildet, über das das Drehmoment übertragen wird und welches eine Resonanzfrequenz aufweist, die unterhalb der Frequenz der mit der Torsionsschwingungsdämpfungsanordnung bei Leerlaufdrehzahl des Antriebs übertragenen Torsionsschwingungen liegt. Dies bewirkt, dass die am Eingang des schwingungsfähigen Systems angelegte Erreger- bzw. Torsionsschwingung zu der am Ausgang des Systems erhaltenen Schwingung phasenverschoben ist. Im idealisierten Fall eines ungedämpften schwingungsfähigen Systems beträgt die Phasenverschiebung ab der Resonanzfrequenz 180°.

In Abhängigkeit von der Reibung, den Feder-Masse-Verhältnissen und der drehzahlabhängigen Anregung, kann bei der Überlagerung des ersten und des zweiten Drehmomentanteiles in der Koppelanordnung mit einer 180°Phasenverschiebung und einer gleichen Amplitude die anregende Torsionsschwingung am Ausgang der Koppelanordnung vollständig kompensiert werden, so dass am Ausgang bzw. an der Abtriebsseite der Torsionsschwingungsdämpfungsanordnung eine gleichmäßige, von Torsionsschwingungen vollständig befreite Drehung ohne Drehungleichförmigkeiten erhalten werden würde. Dieser Betriebspunkt wird als ein Auslöschpunkt bezeichnet. Durch eine Veränderung der Zwischenmassenträgheit, was eine Veränderung des Feder-Masse-Verhältnisses bedeutet, verschiebt sich auch der Auslöschpunkt zu einer anderen Drehzahl. Wird die Zwischenmassenträgheit über die Drehzahl kontinuierlich verändert, kann der Auslöschpunkt der jeweiligen Motordrehzahl nachgeführt werden. Somit lässt sich über einen breiteren Drehzahlbereich eine vollständige Auslöschung der Schwinganteile erreichen. Mit den in realen Systemen auftretenden Reibungsverlusten bzw. sonstigen Leistungsverlusten ist ein ungedämpftes schwingungsfähiges System nicht realisierbar. Daher werden die real realisierbaren Phasenverschiebungen des schwingungsfähigen Systems abhängig vom Abstand zur Resonanzfrequenz des schwingungsfähigen Systems unter 180° liegen und sich erst bei hohen Frequenzen dem Wert von 180° nähern. Nichtsdestotrotz kann unter Berücksichtigung der Dämpfungsverluste bzw. der Dämpfungseigenschaften des schwingungsfähigen Systems eine konstruktive Auslegung der leistungsverzweigenden Torsionsschwingungsdämpfungsanordnung derart vorgenommen werden, dass bei einer konstruktiv vorgegebenen Drehzahl, dem Auslöschpunkt, die maximale erzielbare Kompensation der Drehungleichförmigkeiten erreicht wird. Dieser ist insbesondere auch von dem Verhältnis der abhängig, in dem die übertragenen Momente in die Koppelanordnung 10 addiert werden.

Vor einer detaillierteren Beschreibung der Ausführungsbeispiele, die zur Veränderung des wirksamen Massenträgheitsmomentes der Sekundärseite des schwingungsfähigen Systems führen können, wird nachfolgend zum besseren Verständnis kurz die Funktionsweise der Torsionsschwingungsdämpfungsanordnung von Fig. 1 erläutert.

Dabei werden zunächst die Kraft- bzw. Drehmomentflüsse entlang der einzelnen Drehmomentübertragungswege 6 und 8 dargestellt, beginnend mit dem zweiten Drehmomentübertragungsweg 8. An der Antriebsseite 2 kann die Torsionsschwingungsdämpfungsanordnung an ein rotierendes Antriebsaggregat, beispielsweise die Schwungscheibe oder die Kurbelwelle eines Verbrennungsmotors angebunden werden. Die erwähnte Anbindung kann dabei, wie in Fig. 1 gezeigt, beispielsweise über eine Primärmasse 24, also eine scheibenförmige, massive Anordnung erfolgen, die gleichzeitig die Primärseite des schwingungsfähigen Systems zum Erzeugen der Phasenverschiebung bildet. Mit der Primärmasse 24 ist bei dem in Fig. 1 gezeigten Ausführungsbeispiel über eine Verschraubung ein Planetenradträger 26 verbunden, an dem entlang des Umfangs der im Wesentlichen rotationssymmetrischen Torsionsschwingungsdämpfungsanordnung eine Mehrzahl drehbarer Planetenräder 28 angeordnet sind. Das mittels eines Wälzlagers 30 an dem Planetenradträger 26 befestigte Planetenrad 28 weist vorliegend zwei Verzahnungen mit sich unterscheidenden Außendurchmessern auf. Eine abtriebsseitige Verzahnung 32 hat einen kleineren Durchmesser als eine antriebsseitige Verzahnung 34 des Planetenrads. Die abtriebsseitige Verzahnung 32 des Planetenrads befindet sich in einem Kämmeingriff mit einem abtriebsseitigen Hohlrad 36, welches an die Abtriebsseite angebunden ist. Somit erfolgt die Übertragung der Rotation bzw. des Drehmoments entlang des zweiten Drehmomentübertragungswegs 8 über die Primärmasse 24, den Planetenradträger 26, das Planetenrad 28 und über die abtriebsseitige Verzahnung 32 des Planetenrads auf das abtriebsseitige Hohlrad 36.

Im ersten Drehmomentübertragungsweg 6 befindet sich die ein schwingungsfähiges System umfassende Phasenschieberanordnung. Das heißt, der erste Drehmomentübertragungsweg 6 umfasst die Primärmasse 24, mit der bei dem in Fig. 1 dargestellten Ausführungsbeispiel zusätzlich ein Deckblech 38 verschraubt ist. Die die Primärmasse 24 umfassende Primärseite des schwingungsfähigen Systems ist über eine zweistufige Federanordnung mit einer bezüglich der Primärseite drehbaren Sekundärseite des schwingungsfähigen Systems verbunden. Die Primärseite ist über eine Mehrzahl von Schraubenfedern 40 einer ersten Stufe mit einer Nabenscheibe 41 verbunden, die wiederum über eine Mehrzahl von weiteren Schraubenfedern 42 einer zweiten Stufe mit abtriebsseitigen Deckblechen 43 verbunden sind, die wiederum mittels einer Verschraubung an den Hohlradträger 44 angebunden sind und zusammen mit diesem die Sekundärseite des schwingungsfähigen Systems bilden. Das antriebsseitige Hohlrad 46 ist an dem Hohlradträger 44 angebracht und steht in einem Kämmeingriff mit der antriebsseitigen Verzahnungen 34 des Planetenrads 28. Der erste Drehmomentübertragungsweg, der bei dem vorliegenden Ausführungsbeispiel die Phasenschieberanordnung aufweist, verläuft somit über die Primärmasse 24, die Federanordnung mit den Federn 40, der Nabenscheibe 41, den Federn 42, den abtriebsseitigen Deckblechen 43, den mit diesen verschraubten Hohlradträger 44, das antriebsseitige Hohlrad 46 sowie über das Planetenrad 28 auf das abtriebsseitige Hohlrad 36.

Zum Zwecke der Abdichtung der geschmierten Planetenträgeranordnung, die im Wesentlichen die Koppelanordnung 10 zum Überlagern der beiden über den ersten Drehmomentübertragungsweg 6 und den zweiten Drehmomentübertragungsweg 8 übertragenen Drehmomentanteile dient, ist ferner ein gewinkeltes Dichtblech 48 mit dem abtriebsseitigen Hohlrad 36 verschraubt, welches sich von außen bis zu einem Außendurchmesser des antriebsseitigen Hohlrades 46 erstreckt. Mit dem abtriebsseitigen Hohlrad 36 ist ferner ein Sekundärschwungrad 50 verbunden, welches bezüglich der Primärmasse 24 drehbar gelagert ist und beispielsweise die Eingangsseite für eine im Antriebsstrang nachfolgende trocken laufende Kupplung bilden kann. Es versteht sich von selbst, dass bei alternativen Ausführungsbeispielen an den Abtrieb bzw. die Abtriebsseite 4 andere Baugruppen bzw. Abtriebselemente anschließen können. Beispielsweise kann die Abtriebsseite 4 mit einer nasslaufenden, einer trockenlaufenden Einscheiben-, Doppel - oder Mehrscheibenkupplung verbunden sein, sowie direkt mit einer Getriebeeingangswelle eines Schaltgetriebes, eines Wandler- oder Stufenautomaten.

Wie aus Fig. 1 ersichtlich, ist der zweite Drehmomentübertragungsweg 8 im Wesentlichen steif, d. h. eine relative Verdrehung zwischen innerhalb dieses Drehmomentübertragungswegs angeordneten Komponenten erfolgt, abseits der unvermeidlichen elastischen Deformationen, nicht. Die über den zweiten Drehmomentübertragungsweg 8 übertragenen Torsionsschwingungen bzw. Drehungleichförmigkeiten werden daher ohne Phasenverschiebung bzw. Phasensprung und ungedämpft an die Koppelanordnung 10 übertragen.

Das im ersten Drehmomentübertragungsweg 6 angeordnete schwingfähige System, dessen Aufbau einem herkömmlichen Torsionsschwingungsdämpfer bzw. einem Zweimassenschwungrad ähnelt, erzeugt die für die Phasenschieberanordnung 12 charakteristische Phasenverschiebung zwischen der Primärseite des schwingungsfähigen Systems und der Sekundärseite desselben. Diese tritt insbesondere im normalen Betrieb immer auf, wenn die Resonanzfrequenz des schwingungsfähigen Systems unterhalb der Torsionsschwingung bei der Leerlaufdrehzahl des Antriebsaggregats gewählt wird. Dies bedeutet, dass die Torsionsschwingungsanteile, die über den ersten Drehmomentübertragungsweg 6 zur Koppelanordnung 10 geleitet werden, eine Phasenverschiebung von maximal 180° bezüglich derjenigen Anteile aufweisen, die über den zweiten Drehmomentübertragungsweg 8 geleitet werden, sodass diese sich im Idealfall vollständig kompensieren können. Die unerwünschte Drehschwingung kann also an einem Auslöschpunkt idealisiert vollständig kompensiert werden.

Zur detaillierten Beschreibung der Funktionalität der Torsionsschwingungsdämpfungsanordnung werde zunächst angenommen, dass in der zu übertragenden Rotation keine Drehungleichförmigkeiten auftreten, Torsionsschwingungen an der Antriebsseite 2 also nicht vorhanden sind. In diesem Fall rotieren die Primärmasse 24, der Planetenradträger 26, die Nabenscheibe 41 sowie das antriebsseitige Hohlrad 46 mit identischer Drehzahl. Daher stehen auch die Planetenräder 28 still, was zur Folge hat, dass auch das abtriebsseitige Hohlrad 36 mit der Rotationsgeschwindigkeit der Primärmasse 24 rotiert. Bei einem schnellen Anstieg der Rotationsgeschwindigkeit, wie sie beim Auftreten einer Drehungleichförmigkeit bzw. einer Rotationsschwingung auftritt, wird der zweite Drehmomentübertragungsweg dieser Anregung ohne Phasenverzögerung unmittelbar folgen, was eine Beschleunigung des Planetenradträgers 26 zur Folge hat. Dieser versucht, den Drehmoment- bzw. Rotationsgeschwindigkeitsanstieg über die Wechselwirkung des Planetenrads 28 mit dem abtriebsseitigen Hohlrad 36 der Koppelanordnung 10 und über das abtriebsseitige Hohlrad 36 auf die Abtriebsseite 4 zu übertragen.

Der hochfrequente schnelle Anstieg des Drehmoments bzw. der Drehzahl an der Primärmasse 24 führt jedoch im ersten Drehmomentübertragungsweg 6 dazu, dass die Schraubenfedern 40 komprimiert werden, und sich die Primärseite bezüglich der Sekundärseite, also die Primärmasse 24 bezüglich der Nabenscheibe 41 und dem antriebsseitigen Hohlrad 46 verdreht. Das heißt, das antriebsseitige Hohlrad 46 schwingt entgegenversetzt zu dem Planetenradträger 28 ohne Anregung durch die Rotationsschwingung, d. h. die Rotationsgeschwindigkeit des antriebsseitigen Hohlrades 46 ist zunächst geringer als diejenige des Planetenradträgers 26. Die Drehzahldifferenz führt dazu, dass das Planetenrad 28 rotiert und dabei das abtriebsseitige Hohlrad 36 mitnimmt, welches dadurch der mit der Anregungsfrequenz der Torsionsschwingung auftretenden ansteigenden Drehzahl des Planetenradträgers 26 nicht folgen kann.

Zusammengefasst werden so die Torsionsschwingungen an derjenigen Stelle, wo die beiden Drehmomente des ersten Drehmomentübertragungswegs 6 und des zweiten Drehmomentübertragungswegs 8 zusammengeführt werden, nämlich am Kämmeingriff der Planetenräder 28 mit den Hohlrädern 36 und 46, zumindest teilweise destruktiv überlagert.

Theoretisch möglich wäre bei dem bislang beschriebenen System eine vollständige Auslöschung bei lediglich einer Drehzahl. Die nachfolgen beschriebenen Ausführungsbeispiele der Erfindung ermöglichen eine nahezu vollständige Auslöschung innerhalb eines ganzen Drehzahlbandes.

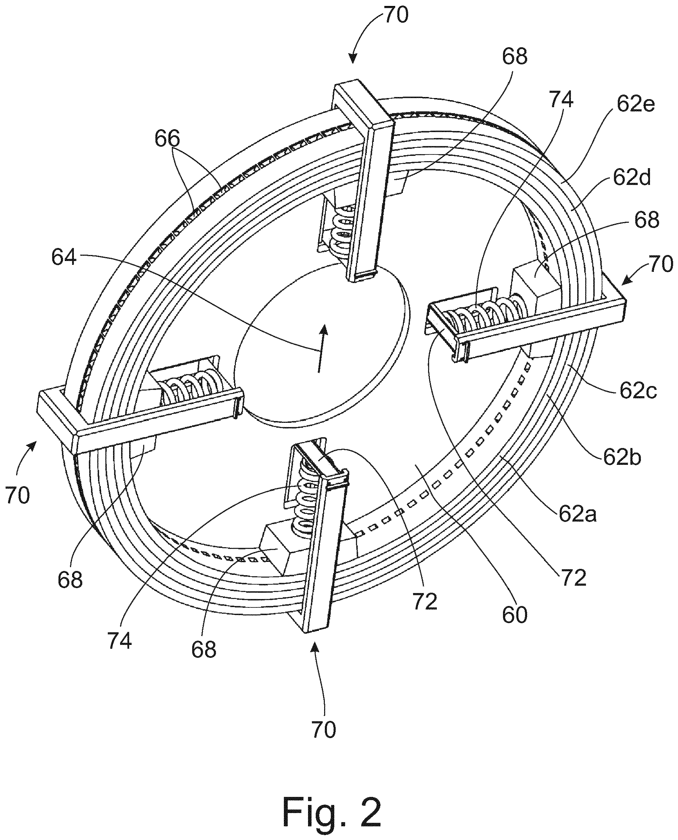

Fig. 2 zeigt ein Beispiel, wie die Sekundärseite des schwingungsfähigen Systems der Fig. 1 ausgeführt oder ergänzt sein kann, um eine von der Rotationsgeschwindigkeit abhängige Änderung des wirksamen Massenträgheitsmoments der Sekundärseite zu bewirken. Das schwingungsfähige System in Fig. 1 wird dabei insbesondere aus der die Primärseite bildenden Primärmasse 24, sowie den Schraubenfedern 40 eines äußeren Federsatzes, der Nabenscheibe 41, die den äußeren Federsatz mit einem inneren Federsatz 42 verbindet und den abtriebsseitigen Deckblechen 43 sowie dem damit drehfest verbundenen Hohlradträger 44 gebildet. Das heißt, der Hohlradträger 44 sowie die mit diesem verbundenen abtriebsseitigen Deckbleche bilden die Sekundärseite des schwingungsfähigen Systems. Diese kann, wie nachfolgend anhand der Fig. 2 - 5 diskutiert, drehzahlabhängig in ihrem wirksamen Massenträgheitsmoment variiert werden, indem beispielsweise das in Fig. 2 gezeigte Bauteil als Hohlradträger 44 verwendet wird. Dieses besteht aus einem Zentralelement 60, das vorliegend die Form einer Scheibe hat sowie aus einer Mehrzahl, vorliegend fünf, drehbar relativ zu dem Zentralelement 60 gelagerten, konzentrischen Masseringen 62a - 62e. Das heißt, die Masseelemente 62a - 62e sind vorliegend in Form von zueinander unmittelbar benachbarten, relativ zueinander in Umfangsrichtung drehbaren Masseringen ausgebildet. Die Masseringe 62a - 62e sind relativ zueinander und relativ zum Zentralelement 60 drehbar und weisen jeweils eine Mehrzahl von zueinander in Umfangsrichtung benachbarten sich in der radialen Richtung 64 vollständig durch das jeweilige Masseelement erstreckenden Durchbrüche 66 auf. Der innere Massering bzw. das innere Masseelement 62a ist auf einem Lagerbock 68 drehbar gelagert.

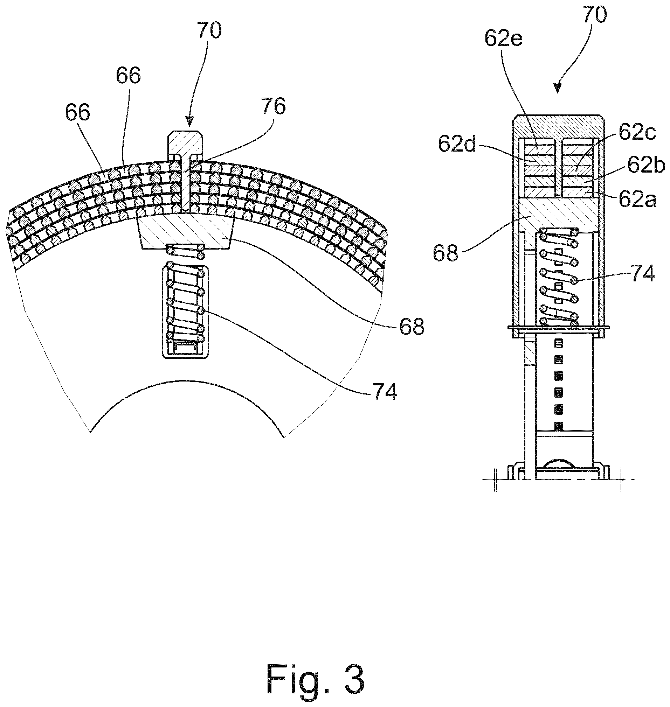

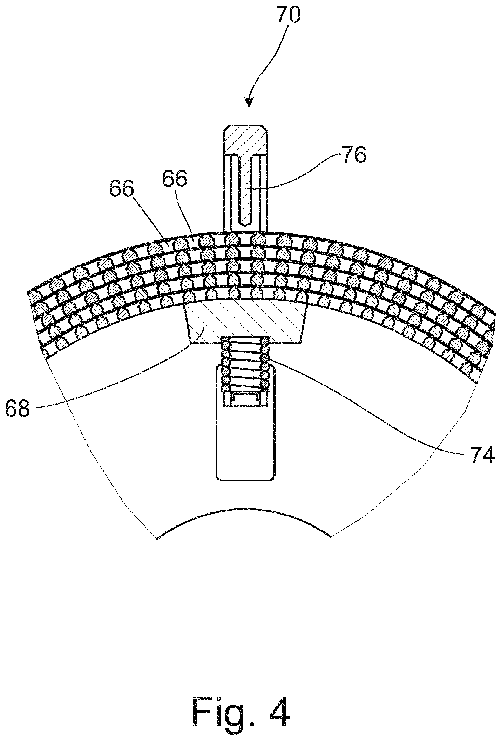

In dem in Fig. 2 in der Ansicht dargestellten Ausführungsbeispiel sind vier Stellelemente 70 äquidistant über den Umfang der Masseelemente 62a - 62e verteilt. Bei dem in Fig. 2 dargestellten Ausführungsbeispiel kann die Anbindung des antriebsseitigen Hohlrades 46 beispielsweise über die Lagerböcke 68 oder direkt über das Zentralelement 60 erfolgen. Die Stellelemente 70 selbst sind bezüglich der Lagerböcke 68 und somit auch bezüglich des Zentralelements 60 radial beweglich gelagert, in dem diese eine Nase bzw. eine Feder aufweisen, die in einer Nut in den Lagerböcken 68 läuft. Zum besseren Verständnis der Funktionsweise des Ausführungsbeispiels der Fig. 2 wird nachfolgend ebenfalls auf die Fig. 3 und 4 Bezug genommen, wobei die Fig. 3 einen Längs- sowie einen Querschnitt durch die Anordnung der Fig. 2 zeigt und wobei Fig. 4 den Längsschnitt der Fig. 3 zeigt, allerdings bei einer hohen Rotationsgeschwindigkeit, bei der sich das Stellelement 70 in seiner radialen äußeren Endposition befindet.

Zwischen den Lagerböcken 68 und einen das Stellelement radial innen begrenzenden Riegel 72 ist ein Federelement 74 bzw. eine Feder angeordnet, die das Stellelement 70 bei Stillstand der Anordnung in seiner in Fig. 2 und 3 gezeigten radial inneren Endposition hält. Während der Montage kann der Riegel 72 beispielsweise nach Montage der Feder 74 durch zwei Schlitze im Stellelement 70 eingeschoben und dann Mittels umbiegen seiner Enden bezüglich des Stellelements 70 fixiert werden. Selbstverständlich kann die Befestigung des Riegels 72 auch auf jede andere Art und Weise erfolgen, wie beispielsweise durch Löten, Kleben, Schweißen, Schrauben oder Nieten. Zu diesem Zweck kann der Riegel 72 selbstverständlich auch ohne das Vorsehen von Durchbrüchen bzw. Schlitzen von unten bzw. von radial innen angeformt werden oder durch Umformung der radial erstreckenden Seitenteile des Stellelements 70 gebildet werden. Auch kann die Feder 74 erst nach dem Verbinden des Riegels 72 eingesteckt werden.

Aufgrund der im Betrieb auftretenden Fliehkraft und der radial beweglichen Lagerung bezüglich des Zentralelements 60 und der Masselelemente 62a - 62e kann sich bei höheren Drehzahlen das Stellelement 70 gegen die Wirkung der Federanordnung 74 aufgrund der auf sie wirkenden Fliehkräfte radial nach außen bewegen. Wie aus den Schnittansichten in den Fig. 3 und 4 deutlich wird, weist das Stellelement 70 ferner einen Verriegelungsstift 76 auf, der sich bei der in Fig. 2 und 3 dargestellten radialinneren Position des Stellelements 70 radial nach innen durch jeweils einen Durchbruch 66 eines jeden der Masseelemente 62a - 62e erstreckt und diese somit drehfest an das Zentralelement 60 anbindet. Bewegt sich das Stellelement 70 unter dem Einfluss der Fliehkraft nach radial außen, gibt der Verriegelungsstift 76 nacheinander die Masseringe 62a - 62e frei, das heißt, dieser löst bei einer jeweils zugehörigen vorbestimmten Rotationsgeschwindigkeit die drehfeste Anbindung zwischen dem betreffenden Massering und dem Zentralelement 60. Verringert sich die Drehzahl erneut, wird das Stellelement 70 von dem Federelement 74 wieder nach radial innen bewegt, sodass der Verriegelungsstift 76 nacheinander in die Durchbrüche 66 der Masseelemente eingreift und diese von außen nach innen drehfest wieder mit dem Zentralelement 60 verbindet.

Fig. 4 zeigt zur Verdeutlichung das Stellelement in seiner radial äußeren Position, in welcher der Verriegelungsstift 76 vollständig aus den Durchbrüchen 66 aller Masseelemente 62a - 62e entfernt ist, sodass diese nunmehr frei bezüglich des Zentralelements 60 verdrehbar sind und daher nicht mehr zum wirksamen Massenträgheitsmoment der in Fig. 2 gezeigten Anordnung bzw. der Sekundärseite des schwingungsfähigen Systems der Fig. 1 beitragen. Um bei einer erneuten Verringerung der Rotationsgeschwindigkeit ein Wiedereinfädeln des Verriegelungsstifts 76 in die Durchbrüche 66 zu erleichtern, weisen die Durchbrüche 66 bzw. die Masseelemente 62a - 62e und der Verriegelungsstift 76 zueinander korrespondierende Einführschrägen auf.

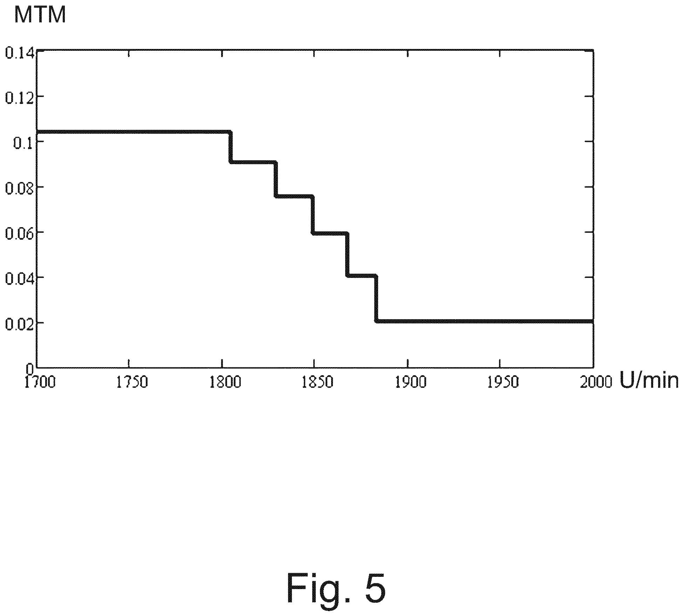

Das Anhand der Fig. 2 - 4 diskutierten Ausführungsbeispiel der Erfindung ermöglicht es, die wirksame Massenträgheit bzw. die Massenträgheit mit steigender Drehzahl zu reduzieren, wie für das Ausführungsbeispiels der soeben besprochenen Figuren in Fig. 5 schematisch dargestellt ist. Fig. 5 zeigt dabei auf der x-Achse die Drehzahl des Antriebsstrangs und auf der y-Achse das wirksame Massenträgheitsmoment der Sekundärseite bzw. die gesamte Massenträgheit der Zwischenmasse der Leistungsverzweigung der Fig. 1 in willkürlichen Einheiten. Um die wirksame Massenträgheit mit steigender Drehzahl zu reduzieren, werden wie anhand der Fig. 3 und 4 ersichtlich, die einzelnen Masseelemente 62a - 62e bei einer Drehzahlsteigerung nacheinander vom Zentralelement 60 abgekoppelt und können sich dann auf den Lagerböcken 68 bzw. relativ zueinander frei drehen. Das exakte Schaltverhalten bzw. die für die Lösung der drehfesten Anbindung der einzelnen Masseelemente relevanten Drehzahlen ergeben sich dabei aus dem Zusammenspiel zwischen der Masse des Stellelements 70 und der Lage dessen Massenschwerpunkts sowie der Federsteifigkeit bzw. der Federkennlinie des Federelements 74. Daraus ergibt sich insbesondere die radiale Position des Stellelements 70 und damit auch des Verriegelungsstifts 76 bei einer bestimmten Drehzahl aus dem Kräftegleichgewicht zwischen der Fliehkraft, die auf das Stellelement 70 wirkt und der Federkraft des Federelements 74.

Ein Massering oder Masseelement kann als abgeschaltet betrachtet werden, sobald der Verriegelungsstift 76 sich aus der jeweiligen Öffnung bzw. dem jeweiligen Durchbruch 66 im Masseelement, insbesondere dem Teil mit den parallelen Flanken, herausbewegt hat. Die Einführschrägen dienen dazu, das Wiedereinfädeln bei sinkender Drehzahl zu erleichtern. Wenn die Schwingungsamplituden der einzelnen Masseelemente größer sind als der von einem einzelnen Durchbruch 66 überdeckte Raumwinkelbereich, gilt ein Massering als noch nicht abgekoppelt, wenn sich der Verriegelungsstift 76 noch im Bereich der Einführschrägen befindet. Das heißt, in diesem Bereich gilt die drehfeste Anbindung zwischen Masseelement und Zentralelement 60 als noch nicht aufgehoben. Als ein Endanschlag, der die radialäußere Position des Stellelements 70 definiert, kann beispielsweise der in Fig. 4 dargestellte Blockzustand der Feder 74 verwendet werden, in dem diese maximal komprimiert ist. Alternativ dazu kann selbstverständlich auch ein mechanischer Endanschlag im Bereich der Führung oder einem sonstigen Bereich des Stellelements 70 vorgesehen werden. Dabei kann insbesondere durch die Federkennlinie des Federelements 74 auch das Schaltverhalten bzw. der Zeitpunkt, bei dem einzelne Masseelemente abgekoppelt werden, auf die Bedürfnisse individuell angepasst werden.

Bei der speziell in Fig. 5 gezeigte Abstimmungen des Ausführungsbeispiels der Fig. 2 ändert sich das wirksame Massenträgheitsmoment in dem Drehzahlbereich zwischen 1800 und 1900 Umdrehungen über fünf Stufen quasi kontinuierlich von 0,1 - 0,02, also um einen Faktor fünf. Selbstverständlich ist es durch Variation der betreffenden Parameter, insbesondere der Federkennlinie des Federelements 74 sowie der einzelnen Massen der individuellen Masseelemente 62a - 62e möglich, die Veränderung der wirksamen Massenträgheit auf beliebige andere Anwendungen anzupassen. Insbesondere können dabei beispielsweise progressive Federkennlinien für das Federelement 74 bzw. sprunghafte Federkennlinien, die durch sukzessives Schalten mehrerer Federn entstehen können, verwendet werden, um ein progressives Verhalten herbeizuführen. Auch können die Sprünge der einzelnen Stufen durch die Wahl von unterschiedlichen großen anzubindenden Masseelementen bzw. Masseelementen mit stark unterschiedlichen trägen Massen beliebig auf die Gegebenheiten angepasst werden.

So kann beispielsweis die spezielle in Fig. 5 gezeigte Abstimmung, bei der in einem Drehzahlbereich zwischen 1810 U/min und 1880 U/min eine quasi- kontinuierliche stufenweise Verringerung der wirksamen Gesamtmassenträgheit von ca. 0,1 kg x m² auf 0,02 kg x m² erreicht wird, in Bezug auf die Drehzahl ohne Weiteres beispielsweise auf den Bereich zwischen 1000 U/min - 2000U/min ausgeweitet bzw. in diesen Bereich verschoben werden. Durch geeignete Variation der oben beschriebenen Parameter kann dabei das wirksame Massenträgheitsmoment auf jedwede Leistungsverzweigung angepasst werden, je nachdem was für den gerade gewünschten Anwendungsfall optimal ist. Selbstverständlich kann auch eine degressive Kennlinie bzw. ein degressiver Verlauf des wirksamen Massenträgheitsmomentes erreicht werden.

Wenngleich in sämtlichen hierin zitierten Ausführungsbeispielen eine Mehrzahl von Masseelementen 62a - 62e bzw. Masseringen verwendet wird, können bei alternativen Ausführungsbeispielen lediglich ein Masseelement bzw. ein Massering verwendet werden, der bei einer bestimmten Drehzahl ab- bzw. angebunden wird, wodurch eine Sprungstelle im Verlauf der wirksamen Massenträgheit entsteht. Diese Ausführung kann eine Nachführung des Massenträgheitsmomentes auf äußerst kostengünstige Art und Weise realisieren.

Zur Verbesserung der Entkopplung zwischen den einzelnen Masseelementen, also um ein Gleiten zwischen den Masseelementen 62a - 62e und den Lagerböcken 68 sowie zwischen den Masseelementen 62a - 62e selbst zu verbessern, können reibungsminimierende Elemente aus einem anderen Material mit geeignetem Reibungskoeffizienten, wie beispielsweise PTFE-Plättchen eingefügt werden oder die gesamte Vorrichtung kann geschmiert betrieben werden, also beispielsweise unter Öl oder Fett laufen.

Bei alternativen Ausführungsbeispielen kann auch das Material der Masseelemente 62a - 62e selbst geeignet gewählt werden, sodass dieses einen selbstschmierenden Effekt zeigt, um bei einer Abkopplung eines einzelnen Masseelementes diesen nahezu vollständig von der erzeugenden wirksamen Massenträgheitsmomentes abzukoppeln.

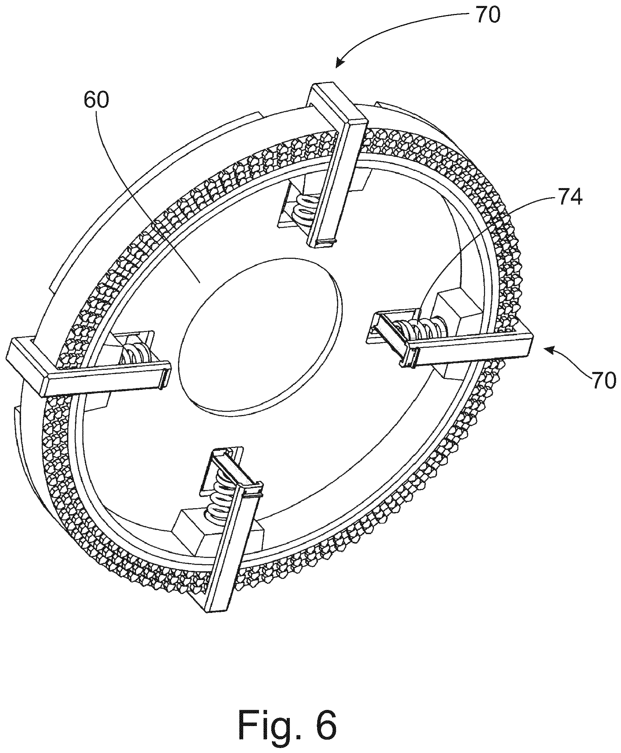

Die Fig. 6 - 8 illustrieren ein alternatives Ausführungsbeispiel der vorliegenden Erfindung, das im Wesentlich auf der bereits anhand der Fig. 2 beschriebenen Funktionsweise basiert.

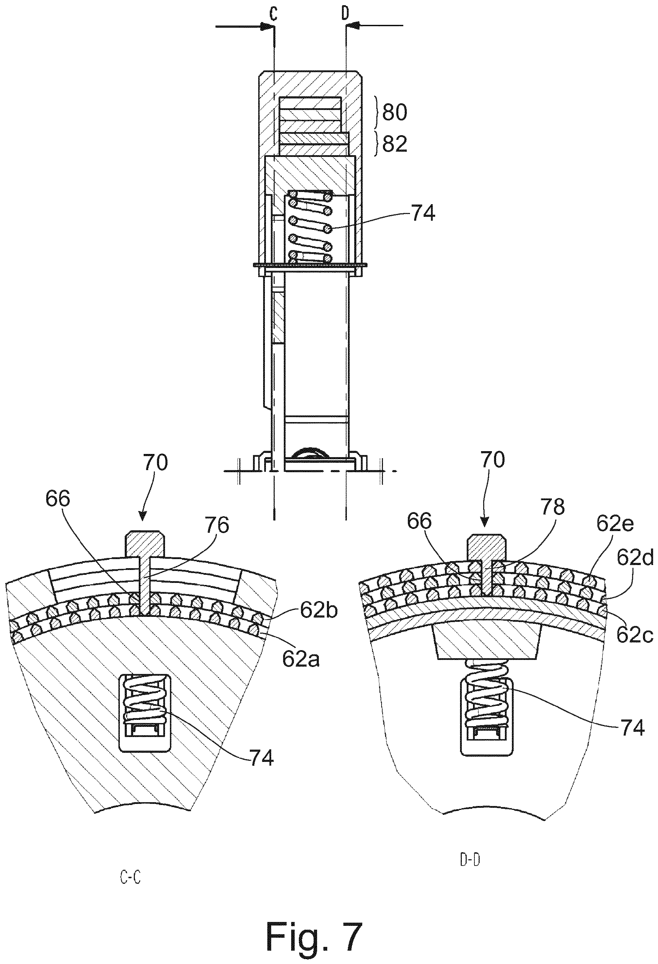

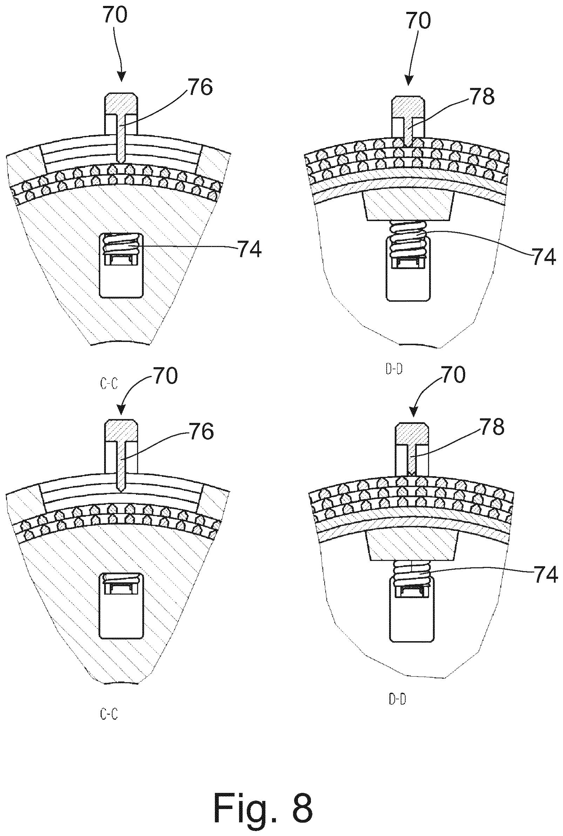

Wie insbesondere aus der Schnittansicht in den Fig. 7 und 8 ersichtlich ist, weist das Stellelement 70 gemäß diesem alternativen Ausführungsbeispiel einen weiteren Verriegelungsstift 78 auf, der sich in der in Fig. 7 dargestellten radialen inneren Position des Stellelements 70 lediglich durch die Durchbrüche einer Gruppe 80 von radial außen liegenden Masseelementen 62c-e erstreckt, wobei sich der Verriegelungsstift 76 radial nach innen durch die Durchbrüche 66 der radialinnenliegenden Masseelemente 62a, b erstreckt. Um bei einer Rotation nicht an dem Verriegelungsstift 76 anzuschlagen, weisen die radialaußenliegenden Masseelemente 80 zusätzlich im Bereich des Verriegelungsstifts 76 eine sich in Umfangsrichtung erstreckende Ausnehmung auf.

Das in den Fig. 6 - 8 dargestellte alternative Ausführungsbeispiel ermöglicht es, bei einem geringeren radialen Hub bzw. einer geringeren radialen Bewegung des Stellelements 70 die gleiche Anzahl von Masseelementen zu schalten, als es in den Ausführungsbeispielen in Figur 2 - 4 dargestellt ist. Wenngleich bei dem hier dargestellten Ausführungsbeispiel die Verriegelungsstifte 76 und 78 des Stellelements 70 linksseitig und rechtsseitig angeordnet sind, versteht es sich von selbst, dass alternative Ausführungsbeispiele die Verriegelungsstifte beliebig anordnen können, um denselben Effekt zu erzielen. Auch kann die Aufteilung beliebig variiert werden. Während bei dem diskutierten Ausführungsbeispiel der Verriegelungsstift 76 in die inneren zwei Masseelemente 62a,b und der weitere Verrieglungsstift 78 in die äußeren drei Masseelemente 62c-e eingreift, kann bei alternativen Ausführungsbeispielen sowohl die Anzahl der Masseelemente unterschiedlich sein als auch die Aufteilung des Eingriffs der unterschiedlichen Verriegelungsstifte. Selbstverständlich können bei alternativen Ausführungsbeispielen auch mehr als zwei Verriegelungsstifte verwendet werden, um das System noch genauer anpassen zu können.

Die Fig. 8 zeigt zur erneuten Verdeutlichung der Funktionalität in der oberen Darstellung die Position des Stellelements 70 bei mittlerer Drehzahl und in der unteren Darstellung die Position des Stellelements 70 bei hoher Drehzahl bei der sich das Stellelement 70 an der radial äußeren Endposition befindet. Mit der in den Fig. 6 - 8 dargestellten Implementierung lässt sich eine ähnliche Schaltcharakteristik erzeugen, wie mit der in den Fig. 2 - 4 dargestellten Ausführungsform. Der Unterschied ist jedoch, dass der Verriegelungsstift aufgeteilt wird und sich an den axialen Enden des Stellelements 70 befindet. Somit ergibt sich ein linksseitiger Verrieglungsstift 76 und ein rechtsseitiger Stellschieber bzw. Verriegelungsstift 78. Die beiden Stellelemente müssen nicht dieselbe Länge aufweisen und greifen nicht in dieselben Masseelemente ein. Bewegt sich das Stellelement radial nach außen, können beispielsweise gleichzeitig oder kurz hintereinander die Masseelemente 62a und 62 c freigegeben werden, je nachdem welches Schaltverhalten gewünscht ist. In jedem Fall ist es dadurch möglich, bei gleichem Verfahrweg mehr Masseringe bzw. Masseelemente freizugeben, wodurch sich der notwendige radiale Bauraum reduziert. In der Fig. 8 sind beispielhaft zwei Schaltzustände dargestellt. In der oberen Darstellung werden bei einer mittleren Position des Stellelements 70 die Masseelemente 62a - 62d freigegeben, wobei bei der unteren Darstellung alle Masseelemente freigegeben sind. Bei den Ausführungsbespielen, die auf Abwandlungen der in den Fig. 6 - 8 gezeigten Stellelemente 70 basieren, bestehen somit weitergehende Möglichkeiten, auf das Schaltverhalten Einfluss zu nehmen.

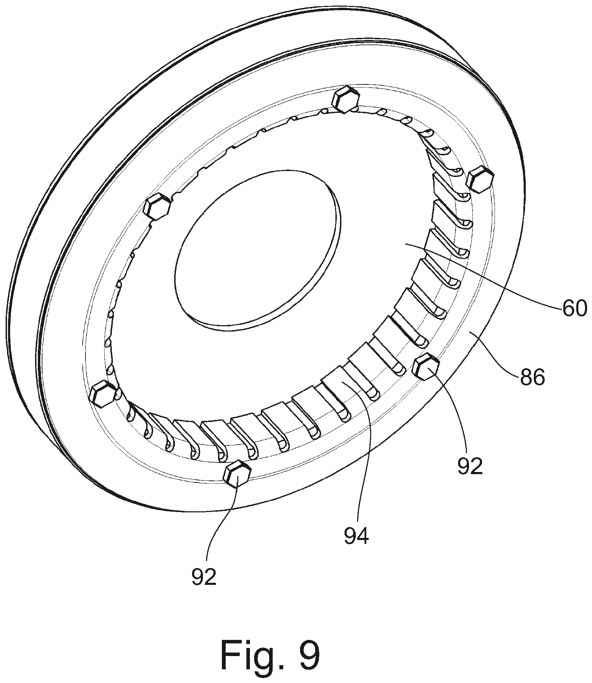

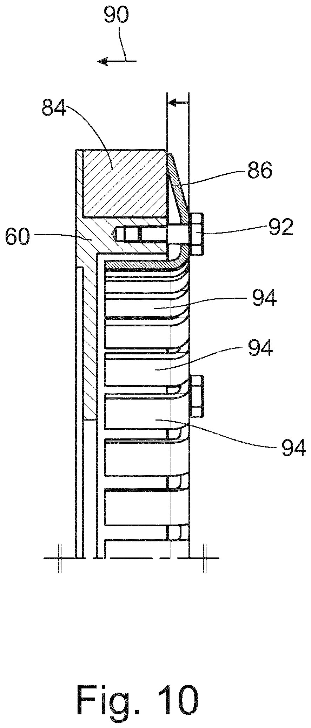

Die Fig. 9 und 10 zeigen in einer Ansicht und in einem Schnitt ein weiteres Ausführungsbeispiel, bei dem ein relativ zu dem Zentralelement 60 in einer Umfangsrichtung bewegliches Masseelement 84 von einer Federanordnung 86 in einer axialen Richtung 90 gegen einer Anlauffläche an dem Zentralelement 60 gedrückt wird, sodass die Anbindung zwischen dem Masseelement 84 und dem Zentralelement 60 reibungsvermittelt ist. Zu diesem Zweck wird bei der in Fig. 10 gezeigten Ausführungsform die Federanordnung 86 mittels eines Abstandsbolzens 92 an den Massering 84 gedrückt. Insbesondere ist hier die Federanordnung 86 in Form einer Membranfeder ausgeführt, wobei bei alternativen Ausführungsbeispielen beliebige anderen Arten von Federanordnungen verwendet werden können.

Die Membranfeder 86 ist über Distanzbolzen 92 mit dem Zentralelement 60 verbunden. Der innere Bereich der Membranfeder 86 ist in Form von einer Mehrzahl von Zungen 94 in Richtung des Masseelements 84 umgebogen. Wenngleich bei dem in den Fig. 9 und 10 gezeigten Ausführungsbeispiel diese Umbiegung radial innerhalb des Masseelements 84 erfolgt, ist es gemäß alternativer Ausführungsbeispiele auch möglich, die Membranfeder 86 radial außerhalb in der axialen Richtung 90 umzubiegen. Bei dem in Fig. 9 gezeigten Ausführungsbeispiel wird die drehzahlabhängige Variation des wirksamen Massenträgheitsmoments erzielt, indem die Wirkung der Masse 84 eingeschränkt wird, bzw. in dem der Anteil der trägen Masse 84 am wirksamen Massenträgheitsmoment eingeschränkt wird. Der Massering 84 ist über den Reibschluss an das Zentralelement 60 angebunden. Erfährt diese Vorrichtung eine Winkelbeschleunigung in Form einer angeregten Drehungleichförmigkeit, wirkt das Massenelement 84 nur bis zum maximalen Reibwert unmittelbar als das wirksame Massenträgheitsmoment erhöhend. Bei hohen Winkelbeschleunigungen, bei dem das Massenelement 84 relativ zu dem Zentralelement 60 gleitet, wirkt die Masse 84 nicht mehr vollständig um das wirksame Massenträgheitsmoment zu bilden.

Das heißt, bei hohen Winkelbeschleunigungen ist die Reaktionskraft bzw. das wirksame Massenträgheitsmoment geringer als bei einer starren Kopplung. Bei geringeren Winkelbeschleunigungen wirkt die Masse in vollem Umfang. Zusätzlich werden bei steigender Drehzahl die Zungen 94 radial nach außen beschleunigt und gezogen und leiten so ein Moment in die Membranfeder 86 ein, was zu einer Verringerung der Anpresskraft der Feder 86 und somit zu einer Verringerung der maximal möglichen Reibkraft führt. Dadurch wird zusätzlich eine Drehzahladaptivität des wirksamen Massenträgheitselements erreicht, da auch bei geringeren Winkelbeschleunigungen und einer höheren Drehzahl die mögliche Reaktionskraft begrenzt wird, das wirksame Massenträgheitsmoment also mit der Drehzahl reduziert wird. Die Auswirkung auf die in Fig. 5 anhand des Ausführungsbeispiels der Fig. 2 diskutierte Kennlinie ist ähnlich, sodass bei einer geeigneten Abstimmung der Materialien bzw. der Reibungskoeffizienten zwischen Masseelement 84 und Zentralelement 60 sowie der Federsteifigkeit der Federanordnung 86 auf äquivalente Art und Weise der Auslöschpunkt der Leistungsverzeigung der Fig. 1 über einen weiten Drehzahlbereich ausgedehnt werden kann.

Wenngleich in den vorhergehend diskutierten Ausführungsformen anhand einer Trockenkupplung als Abtriebselement diskutiert, versteht es sich von selbst, dass alternative Ausführungsformen auch mit nasslaufenden oder trockenlaufenden Einscheiben-Mehrscheiben- oder Doppelkupplungen betrieben werden können, wobei Abtriebsseitig selbstverständlich auch unmittelbar eine Getriebeeingangswelle oder ein Drehmomentwandler angebunden sein kann.

Bei den oben besprochenen Ausführungsformen eines schwingungsfähigen Systems, das sowohl einen Außendämpfer mit radial außen liegenden Federn als auch einen Innendämpfer mit radial innen liegenden Federn aufweist, kann zusätzlich zur Umsetzung einer progressiven oder stufigen Federcharakteristik eine beliebige Kombination der Federn des Außendämpfers und des Innendämpfers verwendet werden. Ausführungen mit nur einem Dämpfer (ohne Innendämpfer oder ohne Außendämpfer) sind selbstverständlich ebenso möglich. Dabei kann in allen Fällen sowohl eine beliebige Kombination aus Reihen- und Serienschaltung der verwendeten Federn bzw. Federnpakete zum Erzielen der gewünschten Federcharakteristik verwendet werden.

### Bezugszeichen

- 2: Antriebsseite
- 4: Abtriebsseite
- 6: erster Drehmomentübertragungsweg
- 8: zweiter Drehmomentübertragungsweg
- 10: Koppelanordnung
- 12: Phasenschieberanordnung
- 24: Primärmasse
- 26: Planetenradträger
- 28: Planetenrad
- 30: Wälzlager
- 32: abtriebsseitige Verzahnung
- 34: antriebsseitige Verzahnung
- 36: abtriebsseitiges Hohlrad
- 38: Deckblech
- 40: Schraubenfeder
- 41: Nabenscheibe
- 42: Schraubenfeder
- 43: abtriebsseitiges Deckblech
- 44: Hohlradträger
- 46: antriebsseitiges Hohlrad
- 48: Dichtblech
- 50: Sekundärschwungrad
- 60: Zentralelement
- 62a-e: Masseelemente
- 64: radiale Richtung
- 66: Durchbruch
- 68: Lagerbock
- 70: Stellelement
- 72: Riegel
- 74: Federelement
- 76: Verriegelungsstift
- 78: weiterer Verriegelungsstift
- 80: erste Gruppe radial außen liegender Masseelemente
- 82: zweite Gruppe von Masseelementen
- 84: Masseelement
- 86: Federanordnung
- 90: axiale Richtung
- 92: Abstandsbolzen
- 94: Zungen

## Patentansprüche

1. Torsionsschwingungsdämpfungsanordnung zum Übertragen einer Rotation von einer Antriebsseite (2) zu einer Abtriebsseite (4), mit folgenden Merkmalen:
einem zwischen der Antriebsseite (2) und der Abtriebsseite (4) angeordneten ersten Drehmomentübertragungsweg (6) zum Übertragen eines ersten Drehmomentanteils;
einem zwischen der Antriebsseite (2) und der Abtriebsseite (4) angeordneten zweiten Drehmomentübertragungsweg (8) zum Übertragen eines zweiten Drehmomentanteils;
einer Koppelanordnung (10) zum Überlagern des ersten Drehmomentanteils und des zweiten Drehmomentanteils;
einer Phasenschieberanordnung (12) zum Bewirken einer Phasenverschiebung zwischen Torsionsschwingungen, die über den ersten Drehmomentübertragungsweg (6) zu der Koppelanordnung (10) übertragen werden und den Torsionsschwingungen, die über den zweiten Drehmomentübertragungsweg (8) zu der Koppelanordnung (10) übertragen werden, wobei die Phasenschieberanordnung (12) ein schwingfähiges System mit einer mit der Antriebsseite (2) gekoppelten Primärseite und einer bezüglich der Primärseite um eine Rotationsachse drehbaren Sekundärseite umfasst, die an die Koppelanordnung (10) angebunden ist, wobei eine Drehung der Primärseite gegenüber der Sekundärseite gegen die Wirkung eines zwischen der Primärseite und der Sekundärseite angeordneten Energiespeichers, wie eine Federanordnung (40; 42), erfolgt, **dadurch gekennzeichnet, dass**
ein eine Veränderung einer Rotationsgeschwindigkeit der Sekundärseite hemmendes wirksames Massenträgheitsmoment der Sekundärseite von der Rotationsgeschwindigkeit abhängig ist.

2. Torsionsschwingungsdämpfungsanordnung nach Anspruch 1, wobei das wirksame Massenträgheitsmoment der Torsionsschwingungsdämpfungsanordnung mit steigender Drehzahl geringer wird.

3. Torsionsschwingungsdämpfungsanordnung nach Anspruch 1 oder 2, wobei die Sekundärseite ein Zentralelement (60) und zumindest ein Masseelement (62a-e) umfasst, dessen drehfeste Anbindung an das Zentralelement (60) bei Überschreiten einer vorbestimmten Rotationsgeschwindigkeit aufgehoben wird.

4. Torsionsschwingungsdämpfungsanordnung nach Anspruch 3, wobei das zumindest eine Masseelement (62a-e) eine ringförmiges Element umfasst, das in einer Umfangsrichtung relativ zu dem Zentralelement (60) beweglich ist.

5. Torsionsschwingungsdämpfungsanordnung nach Anspruch 4, wobei das zumindest eine Masseelement (62a-e) eine Mehrzahl von in einer Umfangsrichtung zueinander benachbarten sich radial durch das Masseelement (62a-e) erstreckenden Durchbrüchen (66) aufweist; und wobei ein unter dem Einfluss einer Fliehkraft radial von einer radial inneren zu einer radial äußeren Position bewegliches Stellelement (70) drehfest an das Zentralelement (62) angebunden ist, wobei das Stellelement (70) einen Verriegelungsstift (76) aufweist, der sich in einer radial inneren Position des Stellelementes (70) durch einen der Durchbrüche (66) des Masseelementes (62a-e) erstreckt um dieses drehfest an das Zentralelement (60) anzubinden.

6. Torsionsschwingungsdämpfungsanordnung nach Anspruch 5, wobei die Torsionsschwingungsdämpfungsanordnung eine Mehrzahl von ringförmigen Masseelementen (62a-e) mit sich jeweils radial durch die Masseelemente (62a-e) erstreckenden Durchbrüchen aufweist, wobei die Mehrzahl von Masseelementen (62a-e) konzentrisch zueinander angeordnet und in Umfangsrichtung relativ zueinander verdrehbar ist und wobei sich in der radial inneren Position des Stellelementes (70) der Verriegelungsstift (76) durch einen Durchbruch in jedem der Masseelemente (62a-e) erstreckt um alle Masseelemente (62a-e) drehfest an das Zentralelement anzubinden.

7. Torsionsschwingungsdämpfungsanordnung nach Anspruch 6, wobei zwischen radial zueinander benachbarten Masseelementen (62a-e) ein Gleitelement aus einem sich von dem Material der Masseelemente unterscheidenden Material angeordnet ist, um eine Reibung zwischen den benachbarten Masseelementen (62a-e) zu verringern.

8. Torsionsschwingungsdämpfungsanordnung nach einem der Ansprüche 5 bis 7, wobei das Stellelement (70) unter dem Einfluss der Fliehkraft gegen die Wirkung eines Federelements (74) nach radial außen beweglich ist, wobei das Federelement (74) eine progressive Federkennlinie oder eine Federkennlinie mit zumindest einer sprunghaften Veränderung der Federsteifigkeit aufweist.

9. Torsionsschwingungsdämpfungsanordnung einem der Ansprüche 6 bis 8, wobei das Stellelement (70) zumindest einen weiteren Verriegelungsstift aufweist, der sich in der radial inneren Position des Stellelements (70) lediglich durch die Durchbrüche (66) einer Gruppe (80) von radial außen liegenden Masseelementen (62c-e) erstreckt, und wobei die Masseelemente (62c-e) der Gruppe (80) im Bereich des Verriegelungsstifts (76) eine sich in Umfangsrichtung erstreckende Ausnehmung aufweisen.

10. Torsionsschwingungsdämpfungsanordnung nach einem der Ansprüche 3 bis 9, wobei die Masseelemente (62a-e) innerhalb eines zumindest teilweise mit einem Schmiermittel gefüllten Volumens angeordnet sind.

11. Torsionsschwingungsdämpfungsanordnung nach Anspruch 1 oder 2, wobei die Sekundärseite ein Zentralelement (60) und zumindest ein relativ zu dem Zentralelement in einer Umfangsrichtung bewegliches Masseelement (84) umfasst, das von einer Federanordnung (86) in einer axialen Richtung (90) gegen eine Anlauffläche an dem Zentralelement (60) gedrückt wird, um eine reibungsinduzierte Anbindung an das Zentralelement (60) zu erreichen.

12. Torsionsschwingungsdämpfungsanordnung nach Anspruch 11, wobei eine von der Federanordnung (86) verursachte Anpresskraft von der Rotationsgeschwindigkeit abhängig ist.

13. Torsionsschwingungsdämpferanordnung nach einem der vorhergehenden Ansprüche, bei der die Koppelanordnung (10) eine Planetengetriebeanordnung umfasst, wobei ein sich in einem Kämmeingriff mit Planetenrädern (28) der Planetengetriebeanordnung befindliches antriebsseitiges Hohlrad (46) drehfest an die Sekundärseite angebunden ist.

## Claims

1. Torsional vibration damping arrangement for transmitting a rotation from a drive side (2) to an output side (4), comprising the following features:
a first torque transmission path (6), arranged between the drive side (2) and the output side (4), for transmitting a first torque portion;
a second torque transmission path (8), arranged between the drive side (2) and the output side (4), for transmitting a second torque portion;
a clutch arrangement (10) for superimposing the first torque portion and the second torque portion;
a phase shift arrangement (12) for bringing about a phase shift between torsional vibrations which are transmitted to the clutch arrangement (10) via the first torque transmission path (6) and the torsional vibrations which are transmitted to the clutch arrangement (10) via the second torque transmission path (8), wherein the phase shift arrangement (12) comprises a system which is capable of vibrating and has a primary side which is coupled to the drive side (2) and a secondary side which can be rotated with respect to the primary side about a rotational axis and which is connected to the clutch arrangement (10), wherein a rotation of the primary side relative to the secondary side takes place counter to the effect of an energy store, such as a spring arrangement (40; 42), which is arranged between the primary side and the secondary side, **characterized in that**
an effective moment of mass inertia of the secondary side, which impedes a change in a rotational speed of the secondary side, is dependent on the rotational speed.

2. Torsional vibration damping arrangement according to Claim 1, wherein the effective moment of mass inertia of the torsional vibration damping arrangement becomes lower as the rotational speed increases.

3. Torsional vibration damping arrangement according to Claim 1 or 2, wherein the secondary side comprises a central element (60) and at least one mass element (62a-e) the rotationally fixed connection of which to the central element (60) is cancelled when a predetermined rotational speed is exceeded.

4. Torsional vibration damping arrangement according to Claim 3, wherein the at least one mass element (62a-e) comprises an annular element which can move in a circumferential direction relative to the central element (60).

5. Torsional vibration damping arrangement according to Claim 4, wherein the at least one mass element (62a-e) has a multiplicity of breakthroughs (66) which are adjacent to one another in a circumferential direction and extend radially through the mass element (62a-e); and wherein an actuator element (70) which can move radially from a radially inner position to a radially outer position under the influence of a centrifugal force is connected in a rotationally fixed fashion to the central element (62), wherein the actuator element (70) has a locking pin (76) which, in a radially inner position of the actuator element (70), extends through one of the breakthroughs (66) of the mass element (62a-e) in order to connect the latter in a rotationally fixed fashion to the central element (60).

6. Torsional vibration damping arrangement according to Claim 5, wherein the torsional vibration damping arrangement has a multiplicity of annular mass elements (62a-e) with breakthroughs which each extend radially through the mass elements (62a-e), wherein the multiplicity of mass elements (62a-e) are arranged concentrically with respect to one another and can be rotated relative to one another in the circumferential direction, and wherein, in the radially inner position of the actuator element (70), the locking pin (76) extends through a breakthrough in each of the mass elements (62a-e) in order to connect all the mass elements (62a-e) in a rotationally fixed fashion to the central element.

7. Torsional vibration damping arrangement according to Claim 6, wherein a sliding element composed of a material which differs from the material of the mass elements is arranged between mass elements (62a-e) which are adjacent radially to one another, in order to reduce friction between the adjacent mass elements (62a-e).

8. Torsional vibration damping arrangement according to one of Claims 5 to 7, wherein the actuator element (70) can move radially outwards counter to the effect of a spring element (74) under the influence of the centrifugal force, wherein the spring element (74) has a progressive spring characteristic curve or a spring characteristic curve with at least one sudden change in the spring stiffness.

9. Torsional vibration damping arrangement according to one of Claims 6 to 8, wherein the actuator element (70) has at least one further locking pin which, in the radially inner position of the actuator element (70) extends exclusively through the breakthroughs (66) of a group (80) of radially outer mass elements (62c-e), and wherein the mass elements (62c-e) of the group (80) have, in the region of the locking pin (76), a recess which extends in the circumferential direction.

10. Torsional vibration damping arrangement according to one of Claims 3 to 9, wherein the mass elements (62a-e) are arranged within a volume which is filled at least partially with a lubricant.

11. Torsional vibration damping arrangement according to Claim 1 or 2, wherein the secondary side comprises a central element (60) and at least one mass element (84) which can move relative to the central element in a circumferential direction, which mass element (84) is pressed by a spring arrangement (86) in an axial direction (90) against a run-off phase on the central element (60) in order to bring about a friction-induced connection to the central element (60).

12. Torsional vibration damping arrangement according to Claim 11, wherein a pressing force which is caused by the spring arrangement (86) is dependent on the rotational speed.

13. Torsional vibration damping arrangement according to one of the preceding claims, in which the clutch arrangement (10) comprises a planetary gear assembly, wherein a drive-side ring gear (46), which is in meshing engagement with planetary gears (28) of the planetary gear assembly, is connected in a rotationally fixed fashion to the secondary side.

## Revendications

1. Agencement amortisseur d'oscillations de torsion pour le transfert d'une rotation d'un côté d'entraînement (2) à un côté de sortie (4), comprenant les caractéristiques suivantes :
une première voie de transfert de couple (6) disposée entre le côté d'entraînement (2) et le côté de sortie (4) pour le transfert d'une première portion du couple ;
une deuxième voie de transfert de couple (8) disposée entre le côté d'entraînement (2) et le côté de sortie (4) pour le transfert d'une deuxième portion du couple ;
un agencement de couplage (10) pour superposer la première portion du couple et la deuxième portion du couple ;
un agencement de déphaseur (12) pour provoquer un déphasage entre les oscillations de torsion qui sont transmises par le biais de la première voie de transfert de couple (6) à l'agencement de couplage (10) et les oscillations de torsions qui sont transmises par le biais de la deuxième voie de transfert de couple (8) à l'agencement de couplage (10), l'agencement de déphaseur (12) comprenant un système capable d'osciller avec un côté primaire accouplé au côté d'entraînement (2) et un côté secondaire, pouvant tourner par rapport au côté primaire autour d'un axe de rotation, qui est raccordé à l'agencement de couplage (10), une rotation du côté primaire par rapport au côté secondaire s'effectuant à l'encontre de l'action d'un accumulateur d'énergie tel qu'un agencement de ressort (40 ; 42) disposé entre le côté primaire et le côté secondaire, **caractérisé en ce qu'**un couple d'inertie de masse actif du côté secondaire, entravant une variation d'une vitesse de rotation du côté secondaire, dépend de la vitesse de rotation.

2. Agencement amortisseur d'oscillations de torsion selon la revendication 1, dans lequel le couple d'inertie de masse actif de l'agencement amortisseur d'oscillations de torsion diminue avec l'augmentation de la vitesse de rotation.

3. Agencement amortisseur d'oscillations de torsion selon la revendication 1 ou 2, dans lequel le côté secondaire comprend un élément central (60) et au moins un élément de masse (62a-e) dont la liaison solidaire en rotation à l'élément central (60) est supprimée lors du dépassement d'une vitesse de rotation prédéterminée.

4. Agencement amortisseur d'oscillations de torsion selon la revendication 3, dans lequel l'au moins un élément de masse (62a-e) comprend un élément annulaire qui peut être déplacé dans une direction périphérique par rapport à l'élément central (60).

5. Agencement amortisseur d'oscillations de torsion selon la revendication 4, dans lequel l'au moins un élément de masse (62a-e) présente une pluralité d'orifices (66) adjacents les uns aux autres dans une direction périphérique et s'étendant radialement à travers l'élément de masse (62a-e) ; et dans lequel un élément de réglage (70) pouvant être déplacé radialement sous l'influence d'une force centrifuge depuis une position radialement à l'intérieur vers une position radialement à l'extérieur est relié de manière solidaire en rotation à l'élément central (62), l'élément de réglage (70) présentant une goupille de verrouillage (76) qui s'étend dans une position de l'élément de réglage (70) radialement à l'intérieur à travers l'un des orifices (66) de l'élément de masse (62a-e) afin de relier celui-ci de manière solidaire en rotation à l'élément central (60).

6. Agencement amortisseur d'oscillations de torsion selon la revendication 5, dans lequel l'agencement amortisseur d'oscillations de torsion présente une pluralité d'éléments de masse annulaires (62a-e) ayant des orifices s'étendant à chaque fois radialement à travers les éléments de masse (62a-e), la pluralité d'éléments de masse (62a-e) étant disposés concentriquement les uns par rapport aux autres et pouvant tourner dans la direction périphérique les uns par rapport aux autres et la goupille de verrouillage (76), dans la position de l'élément de réglage (70) radialement à l'intérieur, s'étendant à travers un orifice dans chacun des éléments de masse (62a-e) afin de relier tous les éléments de masse (62a-e) de manière solidaire en rotation à l'élément central.

7. Agencement amortisseur d'oscillations de torsion selon la revendication 6, dans lequel un élément de glissement constitué d'un matériau différent du matériau des éléments de masse est disposé entre des éléments de masse (62a-e) radialement adjacents les uns aux autres afin de réduire un frottement entre les éléments de masse adjacents (62a-e).

8. Agencement amortisseur d'oscillations de torsion selon l'une quelconque des revendications 5 à 7, dans lequel l'élément de réglage (70) peut être déplacé radialement vers l'extérieur sous l'influence de la force centrifuge à l'encontre de l'action d'un élément de ressort (74), l'élément de ressort (74) présentant une courbe caractéristique de ressort progressive ou une courbe caractéristique de ressort avec au moins une variation de type saut de la rigidité de ressort.

9. Agencement amortisseur d'oscillations de torsion selon l'une quelconque des revendications 6 à 8, dans lequel l'élément de réglage (70) présente au moins une goupille de verrouillage supplémentaire qui s'étend dans la position de l'élément de réglage (70) radialement à l'intérieur uniquement travers les orifices (66) d'un groupe (80) d'éléments de masse (62c-e) situés radialement à l'extérieur, et les éléments de masse (62c-e) du groupe (80) présentant dans la région de la goupille de verrouillage (76) un évidement s'étendant dans la direction périphérique.

10. Agencement amortisseur d'oscillations de torsion selon l'une quelconque des revendications 3 à 9, dans lequel les éléments de masse (62a-e) sont disposés à l'intérieur d'un volume rempli au moins en partie avec un lubrifiant.

11. Agencement amortisseur d'oscillations de torsion selon la revendication 1 ou 2, dans lequel le côté secondaire comprend un élément central (60) et au moins un élément de masse (84) déplaçable par rapport à l'élément central dans une direction périphérique, qui est pressé par un agencement de ressort (86) dans une direction axiale (90) contre une surface de butée au niveau de l'élément central (60) afin d'obtenir une liaison à faible frottement avec l'élément central (60).

12. Agencement amortisseur d'oscillations de torsion selon la revendication 11, dans lequel une force de pressage provoquée par l'agencement de ressort (86) dépend de la vitesse de rotation.

13. Agencement amortisseur d'oscillations de torsion selon l'une quelconque des revendications précédentes, dans lequel l'agencement de couplage (10) comprend un agencement d'engrenage planétaire, une roue dentée (46) du côté de l'entraînement se trouvant en engagement d'engrènement avec des satellites (28) de l'engrenage planétaire étant reliée de manière solidaire en rotation au côté secondaire.
